(19) **Europäisches Patentamt**

**European Patent Office**

**Office européen des brevets**

(11) **EP 0 802 227 B1**

(12) **FASCICULE DE BREVET EUROPEEN**

(45) Date de publication et mention
de la délivrance du brevet:
**15.09.2004 Bulletin 2004/38**

(51) Int Cl.[7]: **C08L 77/00**, C08L 77/02,
C08L 77/06

(21) Numéro de dépôt: **97400775.9**

(22) Date de dépôt: **03.04.1997**

(54) **Pièces injectées en polyamide qui comprennent un modificateur de résistance aux chocs ayant une répartition particulière dans le polyamide**

Spritzgegossene Polyamid-Artikel enthaltend einen Schlagzähigkeitsmodifizierer in spezieller Korngrössenverteilung

Injection moulded polyamide articles comprising an impact modifier with a particular distribution in the polyamide

(84) Etats contractants désignés:
**BE CH DE ES FI FR GB IT LI NL**

(30) Priorité: **16.04.1996 FR 9604719**

(43) Date de publication de la demande:
**22.10.1997 Bulletin 1997/43**

(73) Titulaire: **Atofina**
**92800 Puteaux (FR)**

(72) Inventeurs:
• **Perret, Patrice, M.**
**27470 Serquigny (FR)**

• **Bouilloux, Alain, M.**
**27300 Bernay (FR)**

(74) Mandataire: **Neel, Henry**
**Atofina**
**D.C.R.D./D.P.I.**
**4, Cours Michelet**
**La Défense 10**
**92091 Paris La Défense Cedex (FR)**

(56) Documents cités:
**EP-A- 0 564 338**      **WO-A-91/07467**
**US-A- 4 174 358**

**Description**

La présente invention concerne des pièces injectées en polyamide qui comprennent un modifiant choc ayant une répartition particulière dans le polyamide.

L'amélioration des résistances aux chocs des polyamides est obtenue généralement par incorporation sous forme d'une phase dispersée d'un modifiant choc qui présente un caractère élastomérique et des fonctions réactives (acide acrylique, anhydride maléique) susceptibles de réagir avec des groupements fonctionnels de la matrice polyamide. Cette réactivité permet d'assurer une dispersion fine et homogène de l'élastomère, une bonne adhésion à l'interface nodule matrice mais conduit à une baisse importante de la fluidité. Cette forte évolution de la viscosité est nuisible à la mise en oeuvre, spécialement pour les pièces injectées fines ou de grandes dimensions.

La demanderesse a découvert qu'en utilisant des compositions à base de résine polyamide (A) et d'une phase dispersée constituée d'un mélange d'au moins un copolymère (B) de l'éthylène et d'un époxyde insaturé et d'au moins une polyoléfine (C), caractérisées en ce que la quantité de (B)+(C) est comprise entre 10 et 15 % en poids de (A)+(B) +(C) et dont les particules ont un diamètre moyen en nombre supérieur à 0,4 μm, un diamètre moyen en volume supérieur à 1 μm et telle que plus de 50% en volume des particules sont supérieures à 1 μm, on pouvait obtenir à la fois une bonne résistance au choc et une bonne fluidité. La demanderesse a aussi découvert qu'on obtenait ainsi une bonne résistance au choc en maintenant une bonne fluidité tout en utilisant peu de copolymère réactif (B).

L'art antérieur a déjà décrit des compositions résistantes au choc à base de polyamide.

EP 96 264 décrit des polyamides de viscosité comprise entre 2,5 et 5 renforcés par des copolymères éthylène/ (méth)acrylate d'alkyle en $C_2$ à $C_8$/acide ou anhydride insaturé et comprenant 20 à 40% en poids d'acrylate.

EP 2 761 décrit des polyamides renforcés par des polyéthylènes ou des copolymères d'éthylène greffés par de l'acide (méth)acrylique, ses dérivés ou de l'anhydride maléique et éventuellement du polyéthylène.

EP 52 796 décrit des polyamides renforcés par (i) un copolymère alpha-oléfine/acide carboxylique insaturé, (ii) un copolymère alphaoléfine ester d'alkyle d'acide carboxylique insaturé et (iii) un composé métallique.

FR 2 292 016 décrit des polyamides renforcés par un mélange de copolymères d'alphaoléfines et d'esters d'acides carboxyliques insaturés ou leurs dérivés.

US 5 070 145 décrit des polyamides renforcés par un mélange (i) d'un polyéthylène ou d'un copolymère éthylène/(méth)acrylate d'alkyle et (ii) d'un copolymère éthylène/(méth)acrylate d'alkyle/anhydride maléique.

Cet art antérieur n'a exemplifié que des compositions dont le renforçant choc est à base de polymères à fonctions acides ou anhydride d'acides. Il n'est fait aucune mention de la distribution des particules ni de la viscosité.

WO 91/07467 décrit des polyamides-6 renforcés par des polyoléfines amorphes ou semi-cristallines dans lesquels les polyoléfines sont sous forme de particules de diamètre moyen en nombre entre 0,2 et 1 μm et telles que 25 à 50% en volume des particules ont un diamètre moyen supérieur à 1 μm. Cette demande concerne essentiellement comme polyoléfines des EPR qui sont de viscosité élevée.

US 4 174 358 décrit des polyamides renforcés se présentant sous la forme d'une matrice de polyamide dans laquelle sont dispersés des nodules inférieurs à 1 μm ayant un certain module, devant être aussi une fraction du module du polyamide. De très nombreux renforçants sont décrits, quelques-uns ayant des fonctions époxyde. La plupart sont des polymères ayant des fonctions acides ou anhydrides neutralisées ou sont des mélanges à base d'EPDM. Les polymères à fonctions époxydes ne sont pas exemplifiés. Tous ces renforçants sont présentés comme équivalents.

Tout cet art antérieur n'a exemplifié que des renforçants ayant des fonctions acides ou anhydride d'acide ou des EPDM et il n'est fait aucune mention de la viscosité des polyamides renforcés.

EP 564 338 décrit des polyamides renforcés (i) par des copolymères éthylène/(méth)acrylate d'alkyle/méthacrylate de glycidyle et (ii) éventuellement par des polyéthylènes, des copolymères éthylène/(méth)acrylate d'alkyle ou des copolymères éthylène/(méth)acrylate d'alkyle/anhydride d'acide dicarboxylique insaturé. Cet art antérieur ne s'intéresse qu'à la résistance au choc et pas à la viscosité. Il est clair d'après le tableau des exemples (exemple 6) qu'on a intérêt à mélanger un renforçant ayant des fonctions époxydes avec un renforçant ayant des fonctions anhydride pour provoquer une réticulation de la phase dispersée, ce qui donne de remarquables résistances au choc mais au détriment de la viscosité. Les essais ont été faits sur des éprouvettes de dimensions 4x10x80 mm$^3$ moulées par injection.

Il est clair que sur de telles dimensions et dans des conditions de laboratoire la viscosité est sans importance.

Il en est tout autrement pour les pièces fines ou de plus grandes dimensions ou encore de forme compliquée, ces pièces devant être produites à des cadences industrielles.

L'avantage des compositions de l'invention est le compromis entre la résistance au choc et la viscosité. Un autre avantage est qu'il suffit d'ajouter le renforçant choc c'est-à-dire le produit qui va constituer la phase dispersée dans l'extrudeuse qui alimente le dispositif d'injection. Cet ajout peut être fait par une extrudeuse latérale ou un doseur de granulés sur l'extrudeuse de polyamide. Il n'est donc pas nécessaire de préparer à l'avance le mélange de la résine polyamide et du renforçant choc.

La présente invention concerne donc des pièces injectées à base de résine polyamide (A) et d'une phase dispersée constitué d'un mélange d'au moins un copolymère (B) de l'éthylène et d'un époxyde insaturé et d'au moins une polyoléfine (C), caractérisées en ce que la quantité de (B)+(C) est comprise entre 10 et 15% en poids de (A)+(B) +(C) et dont les particules ont un diamètre moyen en nombre supérieur à 0,4 µm, un diamètre moyen en volume supérieur à 1 µm et telle que plus de 50% en volume des particules sont supérieures à 1 µm.

L'invention concerne aussi les compositions utilisées pour fabriquer ces pièces injectées.

On entend par polyamide les produits de condensation :

- d'un ou plusieurs aminoacides, tels les acides aminocaproïque, amino-7-heptanoïque, amino-11-undécanoïque et amino-12-dodécanoïque d'un ou plusieurs lactames tels que caprolactame, oenantholactame et lauryllactame ;
- d'un ou plusieurs sels ou mélanges de diamines telles l'hexaméthylène-diamine, la dodécaméthylènediamine, la métaxylylènediamine, le bis-p aminocyclohexylméthane et la triméthylhexaméthylène diamine avec des diacides tels que les acides isophtalique, téréphtalique, adipique, azélaïque, subérique, sébacique et dodécanedicarboxylique,

   ou des mélanges de certains de ces monomères ce qui conduit à des copolyamides.

Par exemple la condensation du caprolactame et du lauryllactame produit le PA-6/12. L'invention concerne avantageusement le PA-6 (polycaprolactame), le PA-6,6 (polyhexaméthylène adipamide), le PA-11 (polyaminoundécanoïque acide), le PA-12 (polylauryllactame) et le PA-6/12. Elle est plus particulièrement utile pour les PA-6 et PA-6,6.

Bien que la phase dispersée puisse être constituée de nombreux types de polymères, la demanderesse a trouvé qu'il était avantageux que la phase dispersée soit constituée d'un mélange comprenant au moins un copolymère (B) de l'éthylène et d'un époxyde insaturé et d'au moins une polyoléfine (C).

Le copolymère (B) de l'éthylène et d'un époxyde insaturé peut être obtenu par copolymérisation de l'éthylène et d'un époxyde insaturé ou par greffage de l'époxyde insaturé sur le polyéthylène. Le greffage peut être effectué en phase solvant ou sur le polyéthylène en fusion en présence d'un peroxyde. Ces techniques de greffage sont connues en elles-mêmes. Quant à la copolymérisation de l'éthylène et d'un époxyde insaturé, on peut utiliser les procédés dits de polymérisation radicalaire fonctionnant habituellement à des pressions entre 200 et 2500 bars.

A titre d'exemple d'époxydes insaturés on peut citer :

- les esters et éthers de glycidyle aliphatiques tels que l'allylglycidyléther, le vinyl glycidyléther, le maléate et l'itaconate de glycidyle, le (méth)acrylate de glycidyle, et
- les esters et éthers de glycidyle alicycliques tels que le 2-cyclohexène-1-glycidyléther, le cyclohexène-4,5-diglycidyl carboxylate, le cyclohexène-4-glycidyl carboxylate, le 5-norbornène-2-méthyl-2-glycidyl carboxylate et l'endo cis-bicyclo(2,2,1)-5-heptène-2,3-diglycidyl dicarboxylate.

Le copolymère d'éthylène et d'époxyde insaturé peut comprendre aussi d'autres monomères pouvant être choisis par exemple parmi :

- les alphaoléfines telles que le propylène, le butène-1, l'hexène ;
- les esters vinyliques d'acides carboxyliques saturés tels que l'acétate de vinyle ou le propionate de vinyle ;
- les esters d'acides carboxyliques insaturés tels que les (méth)acrylates d'alkyle pouvant avoir jusqu'à 24 carbones.

A titre d'exemple on peut greffer l'époxyde insaturé sur les polymères suivants :

- le polyéthylène, les copolymères de l'éthylène et d'une alpha-oléfine, les polyéthylènes tels que le LDPE (PE basse densité), le HDPE (PE haute densité), le LLDPE (PE linéaire basse densité), le VLDPE (PE très basse densité) ou le PE métallocène ;
- les copolymères de l'éthylène et d'au moins un ester vinylique d'acide carboxylique saturé, tel que l'acétate de vinyle ou le propionate de vinyle ;
- les copolymères de l'éthylène et d'au moins un ester d'acide carboxylique insaturé, tel que les (méth)acrylates d'alkyle pouvant avoir jusqu'à 24 carbones ;
- les élastomères EPR (éthylène/propylène rubber) ou les EPDM (éthylène/propylène/diène) ;
- des mélanges de polymères choisis parmi les précédents.

A titre d'exemple de polyoléfine (C), on peut citer les mêmes polymères que ci-dessus c'est-à-dire ceux sur lesquels on greffe l'époxyde insaturé pour obtenir (B). Avantageusement (C) est peu ou pas cristallin et a de préférence un caractère élastomérique.

La demanderesse a découvert qu'on obtenait une bonne résistance aux chocs en conservant une bonne fluidité alors que dans le modifiant choc constitué du mélange de (B) et (C) seul (B) avait des groupements fonctionnels.

La demanderesse a découvert qu'à teneur identique en modifiant choc c'est-à-dire pour une même proportion de (B)+(C) dans le polyamide (A) et pour une même qualité de (B) et (C), le meilleur compromis choc fluidité était obtenu par des proportions (C)/(B) d'environ 90/10 en poids, c'est-à-dire qu'en augmentant la proportion de (B) telle que (C)/(B) varie de 95/5 à 80/20, on a découvert que de 9C/10 à 80/20 le gain sur le choc est faible, il est même négatif pour le PA-6, alors que l'indice de fluidité diminue fortement.

La demanderesse a aussi découvert que pour un même rapport (B)/(C) si on augmente la proportion du mélange de (B)+(C) dans le polyamide (A) alors l'indice de fluidité diminuait tandis que la résistance au choc à -40°C n'était pas sensiblement améliorée. Ainsi si (B)+(C) varie de 10 parties pour 90 parties de polyamide (A) à 20 parties pour 80 parties de (A) l'indice de fluidité est réduit d'environ 40% alors que le gain sur le choc est de 15 à 20%.

La quantité d'époxyde du copolymère (B) peut varier et peut être jusqu'à 10% en poids de (B), avantageusement de 0,1 à 8%.

La présente invention concerne aussi des compositions de résine polyamide résistant au choc comprenant un polyamide (A) et une phase dispersée dont les particules ont un diamètre moyen en nombre supérieur à 0,4 µm, un diamètre moyen en volume supérieur à 1 µm, telles que plus de 50% en volume des particules sont supérieures à 1 µm, la quantité de phase dispersée étant telle que leur indice de fluidité est supérieur à 30 % de l'indice de fluidité de (A) seul.

Le copolymère (B) des pièces injectées de l'invention et des compositions de résine polyamide résistant au choc citées ci-dessus est avantageusement un copolymère éthylène/(méth)acrylate d'alkyle/époxyde insaturé.

Avantageusement, il peut contenir jusqu'à 40% en poids de (méth)acrylate d'alkyle et jusqu'à 10% en poids d'époxyde insaturé de préférence 0,1 à 8%.

L'époxyde est avantageusement le (méth)acrylate de glycidyle.

Avantageusement, le (méth)acrylate d'alkyle est choisi parmi le (méth)acrylate de méthyle, l'acrylate d'éthyle, l'acrylate de n-butyle, l'acrylate d'isobutyle, l'acrylate de 2-éthylhexyle.

La quantité de (méth)acrylate d'alkyle est avantageusement de 20 à 35% en poids.

Ce copolymère peut être obtenu par polymérisation radicalaire des monomères.

La polyoléfine (C) des pièces injectées de l'invention et des compositions de résine polyamide résistant au choc citées ci-dessus est avantageusement un copolymère de l'éthylène et d'un (méth)acrylate d'alkyle. Les (méth)acrylates d'alkyle peuvent être choisis parmi ceux déjà cités pour (B). (C) peut contenir jusqu'à 40% en poids de (méth) acrylate et de préférence de 20 à 35%.

De préférence (B) et (C) sont respectivement des copolymères éthylène/(méth)acrylate d'alkyle/(méth)acrylate de glycidyle et éthylènel(méth)acrylate d'alkyle.

Ces copolymères (B) et (C) peuvent être obtenus par polymérisation radicalaire des monomères.

On ne sortirait par du cadre de l'invention en ajoutant des charges minérales (talc, Ca $CO_3$, kaolin) des renforts (fibre de verre, fibre minérale, fibre de carbone), des stabilisants (thermique, UV), des agents ignifugeants et des colorants.

Les compositions de l'invention se préparent par les techniques habituelles des thermoplastiques telles que l'extrusion, les mélangeurs bivis ou

EXEMPLES

- Précompoundage du mélange (C) /(B)

- Compoundage sur monovis Fairex ou Kaufmann, sur comalaxeur BUSS PR 46 ou sur une extrudeuse double vis Werner 40 L/D 40 selon les exemples avec un profil de température 120/140/160/160°C.

- Compoundage des compositions PA modifiées choc

- Compoundage sur une extrudeuse double vis Werner 40, UD 40 munie d'un système de dégazage et d'une coupe à jonc, avec un débit de 40 kg/h et une vitesse de 150 tours/mn.

Les profils de températures utilisés sont les suivants :

| base PA 6 | 240/240/240/240°C |
|---|---|

(suite)

| base PA 6 6 | 260/265/265/266°C |
|---|---|

Les composants en granulés sont mélangés à sec puis introduits dans la trémie d'alimentation.

- Moulage des échantillons

Les granulés sont séchés sous pression réduite à une température de 80°C puis sont moulés par injection sur une presse à injecter type Krauss Maffei B1 (60 T de fermeture) dans les conditions suivantes :

Composition base PA 6

- Température matière 240 - 260°C, moule 50°C
- Pression d'injection 45 bars

Composition base PA 6 6

- Température matière 260 - 280°C, moule 80°C
- Pression d'injection 70 bars.

Les éprouvettes normalisées (80 x 10 x 4 mm$^3$) ainsi obtenues sont conditionnées pendant 14 jours à 23°C et 50% d'humidité relative.

Evaluation

- Module de flexion selon la norme ISO 178
- Résistance aux chocs sur des éprouvettes préalablement entaillées du type CHARPY selon la norme ISO 179-82 et du type IZOD selon la norme ISO 180, à différentes températures (23°C, -20°C, -40°C).

Lorsque la fissure parcourt moins de 90% de l'épaisseur en fond d'entaille de l'échantillon, aucune valeur ne peut être déterminée et la référence N.B. (No Break) est signalée.

- Indice de fluidité MFI selon la norme ISO 1133 sous un poids de 2,16 kg et à des températures de 235°C et 275°C pour les compositions à base respectivement de PA 6 et PA 6 6.
- La détermination du diamètre de la phase dispersée dans la matrice polyamide est réalisée en 5 étapes :

Une coupe microtome de la surface à l'aide d'un couteau de verre est réalisée afin d'avoir une surface plane. Cette opération est faite à basse température (∼ -60°C) avec un microtome MICROM HM 350.

La phase dispersée est extraite de la matrice avec un solvant sélectif du type xylène à 50°C pendant 30 mn. Puis, l'échantillon est séché sous vide.

L'échantillon est ensuite métallisé sous vide avec une fiche couche d'or (-20 nm) avec un équipement de type EDWARDS S 150 A.

- L'échantillon est observé à l'aide d'un microscope électronique à balayage PHILIPS SEM 505 avec une tension d'accélération de 15 KV. Le grossissement est sélectionné de façon à pouvoir observer 500 particules par cliché.

Une méthode semi automatique est utilisée pour quantifier la taille des particules et la distribution de la phase dispersée avec un analyseur d'images KONTRON IBAS 2000. Après binarisation de l'image, la surface de chaque particule dispersée est mesurée. Puis, le diamètre du cercle équivalent de la particule est déterminé pour chaque particule. Un histogramme de distribution, le diamètre moyen en nombre ∅ n, le diamètre moyen en volume ∅ v et l'indice de polydispersité Ip peuvent être calculés de la façon suivante :

$$\varnothing n = \frac{\sum ni\ di}{\sum ni}$$

$$\varnothing v = \frac{\sum ni\ di^4}{\sum ni\ di^3}$$

$$Ip = \frac{\varnothing v}{\varnothing n}$$

où ni est le nombre de particules de diamètre di.

Grâce à l'histogramme, le pourcentage de particules ayant un diamètre $\varnothing$ n et/ou $\varnothing$ v supérieur à une valeur donnée peut être déterminé.

Matières premières

- Les polyamides testés sont les polyamides 6 et 6 6 respectivement commercialisés par la société BASF sous les références Ultramid® B 3 et A 3.

Les polymères testés sont :

TERPO 1 Terpolymère E /AE/MAH 68,5/30/1,5% en poids, MFI 7

TERPO 2 Terpolymère E /AE /MAH 64,1/35 /0,9% en poids, MFI 7

TERPO 3 Terpolymère E /AE /GMA 68/24 /8% en poids, MFI 6

TERPO 4 Terpolymère E /AM /GMA 68/24/8% en poids, MFI 6

Les copolymères (C) testés sont :

COPO 1 Copolymère E /AB 70 /30% en poids, MFI 7

COPO 2 Copolymère E /AB 65/35% en poids, MFI 40

avec les abréviations suivantes :

| | |
|---|---|
| E | Ethylène |
| EA | Ester Acrylique |
| AM | Acrylate de méthyle |
| AE | Acrylate d'éthyle |
| AB | Acrylate de butyle |
| MAH | Anhydride maléique |
| GMA | Méthacrylate de glycidyle |
| MFI | Indice de fluidité (190°C, 2,16 kg) |

| | |
|---|---|
| F | Monovis Fairex |
| B | Malaxeur Buss PR 46 |
| W | Werner 40 |
| K | Monovis Kaufmann |

Les résultats des exemples sont reportés sur les Tableaux 1 et 2 suivants
Tableau 1 = PA6
Tableau 2 = PA6,6.

Exemples 1 - 2 - 3 et 25 - 26 - 27 (comparatifs)

Composition PA 6 ou PA 66 / terpolymère à fonction MAH ou GMA

Quelle que soit la nature du groupe réactif (MAH ou GMA), l'utilisation d'un terpolymère seul comme modifiant choc conduit à de bonnes résistances aux chocs mais une faible fluidité et une phase dispersée très fine.

Exemples 4 et 28 (comparatifs)

Composition PA 6 ou PA 6 6 / mélange (65% copo + 35% terpo - MAH)

Le mélange copo / terpo MAH est réalisé préalablement sur une monovis Fairex, puis introduit par mélange à sec avec le PA sur double vis Werner 40. Ces compositions présentent des résistances aux chocs similaires aux exemples 1-2-3 et 25-26-27 avec une fluidité légèrement améliorée mais pas suffisamment pour permettre une mise en oeuvre aisée en moulage par injection.

Exemples 5 - 6 et 29 (comparatifs)

Composition PA 6 ou PA 6 6 / mélange (copo /terpo GMA 90/10)

Le mélange COPO 1 / TERPO 3 90/10 est réalisé directement par mélange à sec avec le PA (ex 5) ou préalablement par compoundage sur comalaxeur BUSS (ex 6 - 29). Malgré une faible teneur en polyoléfine réactive, des résistances aux chocs satisfaisantes sont obtenues mais en conservant une fluidité nettement supérieure. De plus la dispersion moins fine présente une part importante de particules supérieure à 1 μm.

Exemples 7 - 8 - 9 et 30 - 31 - 32 (comparatifs)

Composition PA 6 ou PA 6 6 /mélange (copo / terpo GMA)

Influence du ratio copo / terpo

Le mélange copo / terpo est réalisé préalablement sur double vis Werner 40. Lorsque la proportion de terpo GMA diminue, les résistances aux chocs sont globalement réduites mais la fluidité est nettement améliorée. Un optimum du compromis résistance aux chocs / fluidité est obtenu pour un ratio copo / terpo GMA 90/10. De plus, la dispersion se caractérise par des diamètres nodulaires moyens supérieurs et un % de particules supérieures à 1 μm plus important.

Exemples 10 - 11 et 33 - 34 (comparatifs)

Composition PA 6 ou PA 6 6 / mélange (copo / terpo GMA 90/10)

Influence de la nature du copo

Le mélange copo / terpo est réalisé préalablement sur une monovis Fairex.
Ces essais mettent en évidence que le COPO doit présenter un caractère élastomérique et une bonne compatibilité avec le terpolymère pour obtenir un bon compromis résistance aux chocs / fluidité. Ainsi, les polyéthylènes de cristallinité élevée doivent être évités.

Exemples 12 - 13 - 14 - 15 et 35 - 36 - 37 - 38 (Comparatifs)

Composition PA 6 ou PA 66 / mélange (copo /terpo GMA 90/10) Influence du procédé de précompoundage

Les mélanges copo / terpo GMA sont réalisés sur différents équipements du type monovis Fairex, Kaufman, comalaxeur Buss ou double vis Werner 40. Le mélange copo / terpo préalable peut être produit sur divers équipements sans nuire ni aux propriétés mécaniques, ni à la fluidité et sans influencer sensiblement la morphologie des compositions finales.

Exemples 16 - 17 - 18 - 19 - 20 - 21 et 39 - 40 - 41 - 42 - 43 - 44 (comparatifs)

Composition PA 6 ou PA 6 6 / terpo MAH ou Terpo GMA

Influence de la teneur en modifiant

Les compositions PA / terpolymère sont produites sur une double vis WERNER 40.

Lorsque la teneur en modifiant augmente, les résistances aux chocs sont améliorées au détriment de la fluidité.

Exemples 22 - 23 - 24 comparatifs et 45 - 46 - 47 comparatifs

Composition PA 6 ou PA 6 6 / mélange (copo / terpo GMA 90/10)

Influence de la teneur en modifiant

Les mélanges copo / terpo sont réalisés préalablement sur une monovis Fairex puis l'incorporation dans la résine polyamide sur une double vis Werner 40.

Lorsque la teneur globale du mélange copo / terpo GMA augmente, les résistances aux chocs sont sensiblement améliorées mais surtout l'évolution de la fluidité est nettement inférieure à celle observée dans les essais 16 à 21 et 39 à 44. De plus, quelle que soit la teneur en modifiant, il faut remarquer que la morphologie caractéristique de l'invention est conservée.

## Tableau 1

| Exemple | Formulation | IZOD entaillé (KJ/m$^2$) | | | CHARPY entaillé (KJ/m$^2$) | | | Mod.Flex (MPa) | MFI dg/mn | Ø n µm | Ø v µm | Ip | % nbre >1 µm | % vol >1 µm |
|---|---|---|---|---|---|---|---|---|---|---|---|---|---|---|
| | | T 23°C | T -20°C | T -40°C | T 23°C | T -20°C | T -40°C | | | | | | | |
| | PA6 | 8 | 6 | 6 | 17 | 11 | 5,7 | 1974 | 21 | | | | | |
| 1 ✳ | 80%PA6+20%TERPO1 | NB | 14 | 9 | NB | 24 | 20 | 1281 | 5,1 | 0,19 | 0,23 | 1,21 | 0 | 0 |
| 2 ✳ | 80%PA6+20%TERPO2 | NB | 11 | 8 | NB | 21 | 17 | 1192 | 5,4 | 0,15 | 0,25 | 1,67 | 0 | 0 |
| 3 ✳ | 80%PA6+20%TERPO3 | NB | 17 | 13 | 38 | 30 | 25 | 989 | 6,4 | 0,39 | 0,60 | 1,55 | 0 | 0 |
| 4 ✳ | 13%COPO1+7%TERPO1+80%PA6 | | | | NB | 24 | 22 | 977 | 5,7 | 0,20 | 1,59 | 7,90 | 1 | 68 |
| 5 ✳ | 18%COPO1+2%TERPO3+80% PA6 | | | | 40 | 28 | 21 | 937 | 8,8 | 0,62 | 1,23 | 1,99 | 9 | 59 |
| 6 ✳ | 20%B(90%COPO1+10%TERPO3)+80%PA6 | | | | 45 | 36 | 32 | 1127 | 7,5 | 0,42 | 0,97 | 2,30 | 6 | 50 |
| 7 ✳ | 20%W(95%COPO1+5%TERPO3)+80%PA6 | | | | 24 | 15 | 14 | 1074 | 13 | 0,81 | 2,54 | 3,14 | 22 | 93 |
| 8 ✳ | 20%W(90%COPO1+10%TERPO3)+80%PA6 | | | | 58 | 34 | 21 | 920 | 9,7 | 0,71 | 1,66 | 2,33 | 17 | 79 |
| 9 ✳ | 20%W(80%COPO1+20%TERPO3)+80%PA6 | | | | 55 | 25 | 18 | 910 | 7,6 | 0,63 | 1,18 | 1,86 | 15 | 56 |
| 10 ✳ | 20%F(90%COPO2+10%TERPO4)+80%PA6 | 20 | 8,8 | 5,1 | 33 | 19 | 11 | 850 | 16,8 | 1,64 | 2,97 | 1,81 | 72 | 99 |
| 11 ✳ | 20%F(90%LDPE+10%TERPO4)+80%PA6 | 8,6 | 4,1 | 3,2 | 19 | 9,2 | 7,8 | 1069 | 9,4 | 1,68 | 3,50 | 2,08 | 62 | 99 |
| 12 ✳ | 20%F(90%COPO1+10%TERPO3)+80%PA6 | | | | 54 | 26 | 17 | 866 | 7,9 | 0,65 | 1,34 | 2,07 | 16 | 73 |
| 13 ✳ | 20%K(90%COPO1+10%TERPO3)+80%PA6 | | | | 56 | 25 | 21 | 831 | 9,1 | 0,66 | 1,26 | 1,89 | 17 | 72 |
| 14 ✳ | 20%B(90%COPO1+10%TERPO3)+80%PA6 | | | | 55 | 25 | 18 | 909 | 7,6 | 0,63 | 1,18 | 1,86 | 15 | 56 |
| 15 ✳ | 20%W(90%COPO1+10%TERPO3)+80%PA6 | | | | 58 | 34 | 21 | 700 | 9,7 | 0,71 | 1,66 | 2,33 | 17 | 79 |
| 16 ✳ | 90%PA6+10%TERPO2 | 17 | 7 | 5 | 21 | 17 | 15 | 1733 | 9,5 | 0,12 | 0,15 | 1,19 | 0 | 0 |
| 17 ✳ | 85%PA6+15%TERPO2 | 18 | 9 | 6 | 22 | 17 | 16 | 1496 | 6,3 | 0,10 | 0,14 | 1,34 | 0 | 0 |
| 18 ✳ | 80%PA6+20%TERPO2 | NB | 11 | 8 | NB | 21 | 17 | 1192 | 5,4 | 0,15 | 0,25 | 1,67 | 0 | 0 |
| 19 ✳ | 90%PA6+10%TERPO3 | 28 | 15 | 10 | 31 | 27 | 18 | 1304 | 13 | 0,31 | 0,47 | 1,51 | 0 | 0 |
| 20 ✳ | 85%PA6+15%TERPO3 | NB | 17 | 12 | 35 | 32 | 23 | 1147 | 9,5 | 0,29 | 0,43 | 1,49 | 0 | 0 |
| 21 ✳ | 80%PA6+20%TERPO3 | NB | 17 | 13 | 38 | 30 | 25 | 989 | 6,4 | 0,39 | 0,60 | 1,55 | 0 | 0 |
| 22 | 10%F(90%COPO1+10%TERPO4)+90%PA6 | 14 | 7,8 | 6,5 | 26 | 20 | 17 | 1082 | 15,3 | 1,53 | 3,20 | 2,10 | 63 | 98 |
| 23 | 15%F(90%COPO1+10%TERPO4)+85%PA6 | 16 | 8,5 | 6,5 | 30 | 21 | 19 | 947 | 12,5 | 1,40 | 6,30 | 4,50 | 48 | 98 |
| 24 ✳ | 20%F(90%COPO1+10%TERPO4)+80%PA6 | 20 | 9,6 | 7,6 | 40 | 24 | 21 | 803 | 9,4 | 1,25 | 2,63 | 2,11 | 51 | 96 |

✳ essais comparatifs

Tableau 2

| Exemple | PA66 + 20% MODIFIANT | IZOD entaillé (KJ/m²) | | | CHARPY entaillé (KJ/m²) | | | Mod.Flex (MPa) | MFI dg/mn | Ø n µm | Ø v µm | Ip | % nbre >1 µm | % vol >1 µm |
|---|---|---|---|---|---|---|---|---|---|---|---|---|---|---|
| | | T 23°C | T -20°C | T -40°C | T 23°C | T -20°C | T -40°C | | | | | | | |
| | PA66 | | | | 16 | 10 | 4,3 | 2592 | 49 | | | | | |
| 25 ✶ | 80%PA66+20%TERPO1 | NB | 16 | 12 | 35 | 31 | 27 | 1391 | 3,8 | 0,21 | 0,4 | 1,9 | 0 | 0 |
| 26 ✶ | 80%PA66+20%TERPO2 | NB | 18 | 12 | 35 | 37 | 29 | 1512 | 4,5 | 0,19 | 0,30 | 1,53 | 0 | 0 |
| 27 ✶ | 80%PA66+20%TERPO3 | 21 | 12 | 9 | 30 | 26 | 25 | 1460 | 15 | 0,45 | 0,87 | 1,91 | 0 | 0 |
| 28 ✶ | 20%F(65%COPO1+35%TERPO1)+80%PA66 | | | | 36 | 28 | 25 | 1319 | 7,2 | 0,26 | 0,43 | 1,68 | 0 | 0 |
| 29 ✶ | W(80%COPO1+20%TERPO3)+80%PA66 | | | | 30 | 22 | 21 | 1420 | 15 | 0,55 | 1,2 | 2,18 | 15 | 65 |
| 30 ✶ | W(95%COPO1+5%TERPO3)+80%PA66 | | | | 26 | 15 | 11 | 1512 | 30 | 1,45 | 3,08 | 2,13 | 58 | 98 |
| 31 ✶ | W(90%COPO1+10%TERPO3)+80%PA66 | | | | 25 | 20 | 17 | 1474 | 26 | 0,82 | 1,93 | 2,35 | 26 | 85 |
| 32 ✶ | W(80%COPO1+20%TERPO3)+80%PA66 | | | | 30 | 22 | 21 | 1420 | 15 | 0,55 | 1,2 | 2,18 | 15 | 65 |
| 33 ✶ | 20%F(90%COPO2+10%TERPO4)+80%PA66 | 13 | 6,5 | 4,4 | 24 | 14 | 9,4 | 1258 | 44 | 1,63 | 3,08 | 1,89 | 71 | 99 |
| 34 ✶ | 20%F(90%LDPE+10%TERPO4)+80%PA66 | 6,7 | 3,6 | 2,9 | 13 | 6,8 | 6 | 1473 | 26 | 1,69 | 3,4 | 2 | 69 | 99 |
| 35 ✶ | F(90%COPO1+10%TERPO3)+80%PA66 | | | | 31 | 24 | 19 | 1417 | 24 | 0,44 | 1,02 | 2,21 | 4,1 | 51 |
| 36 ✶ | K(90%COPO1+10%TERPO3)+80%PA66 | | | | 31 | 24 | 19 | 1468 | 19 | 0,64 | 1,49 | 2,31 | 15 | 72 |
| 37 ✶ | B(90%COPO1+10%TERPO3)+80%PA66 | | | | 30 | 25 | 18 | 1378 | 17 | 0,47 | 1,12 | 2,38 | 8,7 | 62 |
| 38 ✶ | W(90%COPO1+10%TERPO3)+80%PA66 | | | | 33 | 26 | 18 | 1310 | 26 | 0,52 | 1,19 | 2,27 | 8,8 | 56 |
| 39 ✶ | 90%PA66+10%TERPO2 | 17 | 11 | 6 | 29 | 25 | 22 | 1934 | 20 | 0,16 | 0,47 | 2,82 | 0 | 0 |
| 40 ✶ | 85%PA66+15%TERPO2 | 16 | 14 | 10 | 33 | 30 | 28 | 1678 | 13 | 0,18 | 0,25 | 1,41 | 0 | 0 |
| 41 ✶ | 80%PA66+20%TERPO2 | NB | 18 | 12 | 35 | 37 | 29 | 1512 | 4,5 | 0,19 | 0,30 | 1,53 | 0 | 0 |
| 42 ✶ | 90%PA66+10%TERPO3 | 15 | 9 | 7 | 26 | 24 | 22 | 1799 | 41 | 0,37 | 0,58 | 1,58 | 0 | 0 |
| 43 ✶ | 85%PA66+15%TERPO3 | 17 | 11 | 8 | 28 | 26 | 21 | 1748 | 27 | 0,35 | 0,60 | 1,71 | 0 | 0 |
| 44 ✶ | 80%PA66+20%TERPO3 | 21 | 12 | 9 | 30 | 26 | 25 | 1460 | 15 | 0,45 | 0,87 | 1,91 | 0 | 0 |
| 45 | 10%F(90%COPO1+10%TERPO4)+90%PA66 | 12 | 9 | 7 | 23 | 20 | 17 | 1727 | 48 | 0,82 | 2,2 | 2,7 | 26 | 89 |
| 46 | 15%F(90%COPO1+10%TERPO4)+85%PA66 | 16 | 10 | 8 | 25 | 22 | 20 | 1476 | 36 | 0,82 | 2,17 | 2,66 | 24 | 89 |
| 47 ✶ | 20%F(90%COPO1+10%TERPO4)+80%PA66 | 20 | 13 | 9 | 30 | 25 | 20 | 1271 | 26 | 0,8 | 1,87 | 2,32 | 26 | 86 |

✶ essais comparatifs

EP 0 802 227 B1

# EP 0 802 227 B1

## Revendications

1. Compositions de résine polyamide résistant au choc comprenant un polyamide (A) et une phase dispersée constituée d'un mélange d'au moins un copolymère (B) de l'éthylène et d'un époxyde insaturé et d'au moins une polyoléfine (C), **caractérisées en ce que** la quantité de (B) + (C) est comprise entre 10 et 15% en poids de (A)+ (B) + (C) et **en ce que** les particules de la phase dispersée ont un diamètre moyen en nombre supérieur à 0,4 µm, un diamètre moyen en volume supérieur à 1 µm et telles que plus de 50% en volume des particules sont supérieures à 1µm.

2. Compositions selon la revendication 1, **caractérisées en ce que** les proportions de (B) et (C) sont telles que, en poids, le rapport (C)/(B) est d'environ 90/10.

3. Compositions selon les revendications 1 et 2, **caractérisées en ce que** la quantité d'époxyde du copolymère (B) peut être jusqu'à 10% en poids de (B) et avantageusement de 0.1 à 8%.

4. Compositions selon l'une des revendications précédentes, **caractérisées en ce que** (B) est un copolymère éthylène /(méth)acrylate d'alkyle/ époxyde insaturé pouvant contenir jusqu'à 40% en poids de (méth)acrylate d'alkyle et jusqu'à 10% en poids d'époxyde insaturé.

5. Compositions selon la revendication 4, **caractérisées en ce que** (B) est un copolymère éthylène / (méth)acrylate d'alkyle/ (méth)acrylate de glycidyle, contenant de 20 à 35% en poids de (méth)acrylate d'alkyle et 0.1 à 8% en poids de (méth)acrylate de glycidyle.

6. Compositions selon l'une quelconque des revendications précédentes, **caractérisées en ce que** les particules de la phase dispersée ont un diamètre moyen en nombre supérieur ou égal à 0.82µm, un diamètre moyen en volume supérieur ou égal à 2.17 µm et telles que au moins 89% en volume des particules sont supérieures à 1µm.

7. Pièces injectées résistantes au choc obtenues à partir des compositions selon l'une quelconque des revendications précédentes.

## Claims

1. Impact-resistant polyamide resin compositions comprising a polyamide (A) and a dispersed phase consisting of a blend of at least one ethylene/unsaturated epoxide copolymer (B) and of at least one polyolefin (C), **characterized in that** the amount of (B) + (C) is between 10 and 15% by weight of (A) + (B) + (C) and **in that** the particles of the dispersed phase have a number-average diameter of greater than 0.4 µm, a volume-average diameter greater than 1 µm and are such that more than 50% by volume of the particles are greater than 1 µm.

2. Compositions according to Claim 1, **characterized in that** the proportions of (B) and (C) are such that, by weight, the (C)/(B) ratio is about 90/10.

3. Compositions according to Claims 1 and 2, **characterized in that** the amount of epoxide in the copolymer (B) may be up to 10%, advantageously from 0.1 to 8%, by weight of (B).

4. Compositions according to one of the preceding claims, **characterized in that** (B) is an ethylene/alkyl (meth) acrylate/unsaturated epoxide copolymer possibly containing up to 40% by weight of alkyl (meth)acrylate and up to 10% by weight of unsaturated epoxide.

5. Compositions according to Claim 4, **characterized in that** (B) is an ethylene/alkyl (meth)acrylate/glycidyl (meth) acrylate copolymer containing from 20 to 35% by weight of alkyl (meth)acrylate and 0.1 to 8% by weight of glycidyl (meth)acrylate.

6. Compositions according to any one of the preceding claims, **characterized in that** the particles of the dispersed phase have a number-average diameter greater than or equal to 0.82 µm, a volume-average diameter greater than or equal to 2.17 µm and such that at least 89% by volume of the particles are greater than 1 µm.

7. Impact-resistant injection-moulded parts obtained from the compositions according to any one of the preceding claims.

**Patentansprüche**

1.  Stoßfeste Polyamidharzverbindungen mit einem Polyamid (A) und einer dispergierten Phase, die aus einem Gemisch aus mindestens einem Ethylencopolymer (B) und einem ungesättigten Epoxid und mindestens einem Polyolefin (C) besteht, **dadurch gekennzeichnet, dass** die Menge von (B) + (C) zwischen 10 und 15 Gew.-% aus (A) + (B) + (C) liegt und dass die Partikel der dispergierten Phase zahlenmäßig einen mittleren Durchmesser größer als 0,4 µm, volumenmäßig einen mittleren Durchmesser größer als 1 µm haben und derart, dass mehr als 50 Vol.-% der Partikel größer sind als 1 µm.

2.  Verbindungen nach Anspruch 1, **dadurch gekennzeichnet, dass** die Anteile von (B) und (C) derart sind, dass das Verhältnis (C)/(B) in Gewicht etwa 90/10 beträgt.

3.  Verbindungen nach den Ansprüchen 1 und 2, **dadurch gekennzeichnet, dass** die Menge an Copolymerepoxid (B) bis zu 10 Gew.-% an (B) und vorteilhafterweise 0,1 bis 8 % betragen kann.

4.  Verbindungen nach einem der vorhergehenden Ansprüche, **dadurch gekennzeichnet, dass** (B) ein ungesättigtes Copolymer Ethylen/Alkyl(meth)-acrylat/Epoxid ist, der bis zu 40 Gew.-% Alkyl(meth)acrylat und bis zu 10 Gew.-% ungesättigtes Epoxid enthalten kann.

5.  Verbindungen nach Anspruch 4, **dadurch gekennzeichnet, dass** (B) ein Copolymer Ethylen/Alkyl-(meth)acrylat/ Glycidyl(meth)acrylat ist, der 20 bis 35 Gew.-% Alkyl(meth)acrylat und 0,1 bis 8 Gew.-% Glycidyl(meth)acrylat enthält.

6.  Verbindungen nach einem der vorhergehenden Ansprüche, **dadurch gekennzeichnet, dass** die Partikel der dispergierten Phase zahlenmäßig einen mittleren Durchmesser größer oder gleich 0,82 µm, volumenmäßig einen mittleren Durchmesser größer oder gleich 2,17 µm haben und derart, dass mindestens 89 Vol.-% der Partikel größer sind als 1 µm.

7.  Stoßfeste Spritzgussteile, die ausgehend von Verbindungen nach einem der vorhergehenden Ansprüche erzielt werden.